# EUROPÄISCHE PATENTSCHRIFT

(11) **EP 3 216 574 B1**
(45) Veröffentlichungstag und Bekanntmachung des Hinweises auf die Patenterteilung: **25.09.2019**
(21) Anmeldenummer: 16159708.3
(22) Anmeldetag: 10.03.2016
(51) Int. Cl.: B27N 7/00, G01N 21/898

(54) **VERFAHREN ZUM HERSTELLEN EINER OSB**
METHOD FOR MANUFACTURING AN OSB
PROCEDE DE FABRICATION D'UN OSB

(43) Veröffentlichungstag der Anmeldung: 13.09.2017
(73) Patentinhaber: SWISS KRONO Tec AG, 6004 Luzern (CH)
(72) Erfinder: Kalwa, Norbert, 32805 Horn-Bad Meinberg (DE)
(74) Vertreter: Rehmann, Thorsten

(56) Entgegenhaltungen:
- EP-A1- 1 136 636
- EP-A1- 1 749 587
- EP-A2- 2 239 116
- WO-A2-2004/072748
- DE-A1- 2 513 764
- DE-A1- 10 223 831
- DE-A1- 19 624 778
- DE-A1-102008 048 383
- DE-A1-102010 049 638
- US-A- 4 614 555
- US-A- 6 010 793
- US-A1- 2014 046 471

## Beschreibung

Die Erfindung betrifft ein Verfahren zum Herstellen einer OSB, in dem ein aus mehreren Lagen beleimter Strands gestreuter Kuchen in einer Heißpresse zu einer Platte gewünschter Dicke verpresst wird.

Ein solches Verfahren ist beispielsweise aus der DE 10 2005 038 833 B4 oder der EP 2 915 640 A1 bekannt.

Eine OSB (Oriented Strand Board) kommt wegen ihrer guten mechanischen Eigenschaften für eine Vielzahl von Anwendungen in Frage, für die heute Sperrholz eingesetzt wird. Eine OSB zeichnet sich dadurch aus, dass sie von Lage zu Lage sich kreuzende, abwechselnd in Längsrichtung so wie in Querrichtung des Grundrisses verlaufende lange Holzspäne (Strands) aufweist. Die Strands weisen eine Länge von 70 bis 200 mm, eine Breite von 6 bis 30 mm und eine Dicke von 0,3 bis 1,2 mm auf. Als Material wird Nadelholz oder Laubholz verwendet, wobei der Holzanteil in der fertigen Platte zwischen 90 % und 98 % liegt. Die Orientierung der Späne in den einzelnen Schichten wird durch hintereinander angeordnete Streuaggregate realisiert. Durch die Verwendung der Strands weist eine OSB, anders als eine Sperrholzplatte, keine glatte und damit gut beschichtbare Oberfläche auf, sondern in der Oberfläche sind Unebenheiten und/oder Fehlstellen enthalten.

Die aus der EP 1 136 636 A1 bekannte OSB wird als Schalungsplatte verwendet. Um eine glatte Oberfläche zu erzielen, werden auf die letzte Strandschicht Fasern oder Späne aufgestreut, die die Unebenheiten der Oberfläche des Kerns ausgleichen sollen, um eine möglichst plane Oberfläche zu erzielen. Diese Feindeckschicht besteht aus einem Holz-Feinstmaterial, das nach einer Siebmaschenweite, die kleiner als 0,5 mm ist, erhalten wurde. Auf die Feinspäneschicht wird eine Papierschicht aufgelegt und in einer Kurztaktpresse werden alle Schichten miteinander verpresst, wobei unter Druck und Hitze ein Fließen des Kernes erreicht wird und somit eine Klebung zwischen dem Phenolpapier und dem Kern erfolgt.

Dadurch, dass die Streurichtung der Strands von einer Lage zur nächsten um 90° gedreht ist, resultiert eine hohe Biegefestigkeit von OSB, was OSB für viele Anwendungen im Baubereich interessant macht. Ein weiterer Vorteil ist, dass eine OSB, besonders bei der Verwendung von Nadelhölzern, im Vergleich zu anderen Holzwerkstoffen eine niedrigere Rohdichte besitzt. Dies macht OSB auch für Anwendungen im Fahrzeugbau zum Produkt der Wahl. Zudem kann OSB in Längen und Breiten produziert werden, die zum Beispiel den Aufwand zur Konfektionierung bei der Herstellung einer LKW-Ladefläche minimiert.

Bedingt durch die Geometrie der Strands und deren Streuung ergibt sich an der fertigen OSB keine glatte oder gar geschlossene Oberfläche, sondern die OSB weist eine Oberflächenstruktur mit vielen Vertiefungen, teilweise bis zu etwa 4 mm, auf. Diese Oberflächenstruktur verhindert eine Beschichtung von OSB mit bei anderen Holzwerkstoffen üblicherweise verwendeten Technologien, wie beispielsweise das Auflaminieren von mit Harnstoff und/oder Melaminharz imprägnierten Papieren, Aufkaschieren von Finishfolien usw. Damit sind OSB viele Anwendungen verschlossen, die wirtschaftlich interessant wären. Denkbar sind neben Anwendungen für Betonschalungen und Ladeflächen von LKW auch Fußböden, Fahrzeugböden und Seitenverkleidungen von Transportfahrzeugen.

Die stark strukturierte Oberfläche, die von der Länge, Dicke und Form der Strands abhängt, ist nicht reproduzierbar und lässt keinen Einsatz ohne Beschichtung zu, was bei Sperrholz-Platten möglich ist. Dadurch ergeben sich beispielsweise Probleme mit der Reinigbarkeit und durch Ausdünstungen von Holzinhaltsstoffen, die von manchen Menschen als störend empfunden werden.

Eine Möglichkeit, eine glatte Oberfläche zu erzeugen, besteht darin, in eine OSB-Fertigungslinie zusätzliche Streueinrichtungen für feine Späne einzubauen. Dies zieht jedoch eine umfangreiche Investition für die Spanherstellung, Spanaufbereitung und Spanbeleimung nach sich. In bestehenden Fertigungsbetrieben ist in vielen OSB-Linien kein Platz für derartige Installationen, sodass diese Möglichkeit für die meisten Hersteller ausscheidet. Auch bei Neuanlagen ist unklar, wieviel Prozent der gesamten Produktion mit einer derart optimierten Deckschicht versehen werden soll, sodass in einer dahingehenden Investition ein erhebliches Risiko gesehen werden muss.

In der US 4,364,984 A wird eine OSB mit einem fünfschichtigen Aufbau offenbart, wobei die untere und obere Deckschicht gegenüber den Strands des Kernes wesentlich feinere Späne aufweist.

Die DE 25 13 764 A1 offenbart ein Verfahren zur Herstellung einer Holzwerkstoffplatte, bei dem eine Mischung aus Klebstoff, Kunststoff und Holzmehl als Pulver auf die zu beschichtenden Seiten der Holzwerkstoffplatte aufgebracht und dann mit der Holzwerkstoffplatte verpresst wird. Eine solche Platte kann anschließend mit einem Dekorpapier, einer PVC-Folie oder einem Furnier beschichtet werden, um als Möbelplatte Verwendung zu finden.

Die US 4,614,555 A offenbart ein Verfahren zum Ausbessern der Fehlerstellen in der Oberseite einer Sperrholzplatte. Die Fehlerstellen werden gescannt und präzise in ihrer Größe, ihrer Konfiguration und ihrer Lage erfasst. Dann wird die Fehlerstelle fräsend bearbeitet und eine Vertiefung erzeugt, indem das obere Furnierblatt entsprechend ausgefräst wird. Die durch Fräsen hergestellte Vertiefung wird dann mit einem fließfähigen Füllstoff verfüllt und die Oberfläche kann anschließend geschliffen werden.

Die DE 10 2010 049 638 A1 beschreibt ein Verfahren zur optischen Gestaltung der Holzoberfläche eines Paneels, die einen Störbereich aufweist. Der Störbereich wird zunächst ausgebessert und in seiner Lage detektiert. Die Lage des Störbereichs wird anschließend an eine Druckvorrichtung übermittelt, die den ausgebesserten Störbereich mit einem entsprechenden Druckbild bedruckt. Zur Detektierung des Störbereiches werden elektromagnetische Wellen einer Röntgeneinheit verwendet.

Aus der DE 102 23 831 A1 ist ein Verfahren zum Bearbeiten von Leimbindern und anderen Holzwerkstoffen bekannt, die aus einer Mehrzahl aufeinander geleimter Lagen bestehen. Fehlstellen in den Einzellagen, insbesondere an den Sichtflächen, werden durch ein Abtastorgan ermittelt. Ein Steuerungsorgan, in dessen Speicher die Koordinaten der Fehlstellen eingespeist werden, steuert ein Fräswerkzeug, das die Fehlstellen in vorbestimmten Konturen ausarbeitet. In die ausgearbeiteten Fehlstellen werden dann Füllstücke eingesetzt und darin verleimt.

Die DE 10 2008 048 383 A1 offenbart ein automatisches System zum Flicken von Flächen mit natürlicher Musterung, wie sie bei Holzpaneelen vorhanden ist. Nach dem automatischen Erkennen und Flicken der Fehlstellen durch Spachteln oder Dübeln wird die störend sichtbare Flickstelle durch einen numerisch gesteuerten Dekorationsprozess dekoriert. Hierzu wird ein Tintenstrahldrucker verwendet, der aus den globalen Farb- und Strukturmerkmalen des Paneels sowie den lokalen Farb- und Strukturmerkmalen jeder individuellen Fehlerregion lokale Dekorationsmuster aufbringt, die die Fehlstelle als solche nicht mehr sichtbar werden lassen und sowohl lokal als auch global dem Paneel ein gewünschtes ästhetisches Aussehen verleihen.

In der EP 2 239 116 A2 wird ein Verfahren zum automatischen Flicken von Fehlstellen beschrieben, das eine geometrisch genaue und hochempfindliche Lokalisierung der Fehlstellen auch bei nicht-ebenen Paneelen ermöglicht. Mit Hilfe eines optischen Bildaufnehmers werden die Fehlstellen erkannt und mit einem rechnergesteuerten Werkzeug ausgefüllt oder beseitigt, wobei das Werkzeug mit Hilfe der von dem optischen Bildaufnehmer ermittelten Defekt-Positionen gesteuert wird. Zusätzlich wird eine Höhenmessung der Lage der Oberfläche des Paneels mittels einer Höhenmesseinrichtung durchgeführt und die lokale Höhe der Defekte anhand der Höhenmessung bestimmt.

In der WO 2004/072748 A12 wird ein Verfahren zur Rundum-Bearbeitung eines Rohlings mit einer Bearbeitungsmaschine wie beispielsweise einer Fräsmaschine beschrieben. Die Rundum-Bearbeitung geschieht nach Maßgabe einer dreidimensionalen Vorlage. Der Rohling kann beispielsweise eine Turbinenschaufel aus Metall oder einem keramischen Werkstoff sein.

Dem Werkstoff OSB ist eine vernünftige Marktdurchdringung verwehrt, solange deren Oberseite nicht durch einfache und billige Verfahren mit einer glatten beschichtbaren Oberfläche versehen werden können.

Das Aufbringen einer zusätzlichen Feinspanschicht auf die Oberseite, das Zuspachteln der Unebenheiten und/oder Fehlstellen, die Beschichtung mit mehreren harzimprägnierten Papieren oder der Abschliff sind zwar erprobt worden, aber wegen zu hoher Kosten oder Unpraktikabilität nicht realisiert worden. OSB kommt deshalb für höherwertige Anwendungen nicht in Frage und sie wird deshalb größtenteils unveredelt als unbeschichtete Platte für einfache Anwendungen vermarktet.

Von dieser Problemstellung ausgehend liegt der Erfindung die Aufgabe zu Grunde, ein Verfahren zur Herstellung einer OSB mit einer glatten Oberfläche zu schaffen, das kostengünstig und einfach zu realisieren ist.

Zur Lösung des Problems werden folgende Schritte erfindungsgemäß durchgeführt:
a) Scannen der Oberfläche einer Oberseite des Kuchens oder der verpressten Platte zur Ermittlung von Unebenheiten und/oder Fehlstellen,
b) Bestimmung von Positionsdaten der ermittelten Unebenheiten und/oder Fehlstellen,
c) Bestimmung der Volumina der einzelnen Unebenheiten und/oder Fehlstellen,
d) gezieltes Verfüllen der Unebenheiten und/oder Fehlstellen mit einem Füllstoff auf der Grundlage der bestimmten Positionsdaten und Volumina, indem
e) der Füllstoff mit einer Streuvorrichtung aufgestreut wird.

Durch diese Ausgestaltung können die aus Unebenheiten und/oder Fehlstellen resultierenden Vertiefungen mittels punktueller Zufuhr eines Füllstoffes gezielt aufgefüllt werden. Die Schritte können computergestützt hintereinander ohne einen zwischenzeitlichen Eingriff durch Bedienpersonal abgearbeitet werden. Der Scanner digitalisiert die Oberfläche, sodass mithilfe eines Computers, der diese Daten aufnimmt und entsprechend in eine Art digitale Karte der Oberfläche mit x- und y-Werten für die Position in Verbindung mit z-Werten verarbeitet, aus denen dann über Fläche und Tiefe auf das zu füllende Volumen geschlossen wird. Diese digitalen Daten dienen dann zur Steuerung von Position und/oder Menge an Füllstoff.

Ein besonderer Vorteil dieses Verfahrens ist, dass durch das Erfassen der Oberflächengeometrie durch einen Scanner/einer Software diese auch bei späteren Bearbeitungsschritten berücksichtigt werden kann. Bei einem späteren Zuschnitt der unter Umständen dann beschichteten Platten, können bei der Schnittführung die Fehlstellen in der Platte berücksichtigt werden. Unebenheiten und/oder Fehlstellen können entweder in der Oberseite des Kuchens, also noch vor der Presse, oder auf der Oberseite der verpressten noch im Strang befindlichen (also nicht aufgeteilten) Platte, also hinter der Presse, oder an einer extra dafür bereitgestellten aus einem Strang herausgesägten OSB vorgenommen werden.

Der mit der Streuvorrichtung aufgestreute Füllstoff ist vorzugsweise ein Gemisch aus Holzstaub und einem Pulver eines duroplastischen Harzes.

Es kann durchaus sinnvoll sein, Unebenheiten und/oder Fehlstellen erst ab einer festgelegten Fläche und/oder Tiefe zu verfüllen, wenn beispielsweise eine weitere Beschichtung der Oberseite mit einer Deckschicht vorgesehen ist, sodass kleinere Unebenheiten durchaus toleriert werden können. Ab welchem Volumen (Fläche x Tiefe) ein Verfüllen vorgenommen wird, kann durch die Einstellung der Parameter vorgegeben werden.

Vorzugsweise werden die Positionsdaten und die Verteilung der Unebenheiten und/oder Fehlstellen gespeichert und in einem weiteren Bearbeitungsprozess der OSB verwendet. Die Position und die Verteilung kann mittels Software plattenbezogen gespeichert werden und somit für spätere Verarbeitungsschritte genutzt werden.

Zum Scannen der Oberfläche wird vorzugsweise ein Streifenscanner verwendet.

Zur Vergleichmäßigung der Oberfläche nach dem Verfüllen der Unebenheiten und/oder Fehlstellen wird vorzugsweise auf die Oberseite zusätzlich eine vollständige Schicht eines Gemisches aus Holzmehl und eines duroplastischen Harzes aufgestreut. Hierzu kann es vorteilhaft sein, wie bereits erwähnt, gewisse Unebenheiten und/oder Fehlerstellen zu tolerieren. Das Streuen des Füllstoffes wird "über den Scanner" gesteuert, es werden also die Daten verwendet, die über den Scanner ermittelt wurden. Beschränkt sich das Verfüllen auf die größeren Löcher wird die Effektivität der Vorrichtung erhöht. Das großflächige Aufstreuen kann auch nur bereichsweise erfolgen, wenn dies sinnvoll ist.

Auf die verfüllte Platte kann eine imprägnierte Papierlage aufgelegt werden. Vorzugsweise kann auf diese imprägnierte Papierlage dann eine Schicht aus einem Gemisch aus Holzmehl und duroplastischem Harz aufgestreut werden und auf die aufgestreute Schicht eine weitere harzimprägnierte Papierlage aufgelegt werden.

Wenn Unebenheiten und/oder Fehlstellen in der Oberfläche des Kuchens oder des noch nicht aufgeteilten Plattenstranges vorgenommen werden, wird die Oberseite anschließend in einer Conti-Presse in ihre endgültige glatte Form gepresst. Wird eine bereits aufgeteilte Platte beschichtet, erfolgt das Durchhärten in einer Kurztaktpresse.

Als Harz wird vorzugsweise ein Melaminharz oder ein Phenolharz verwendet. Auch kann ein Gemisch aus Melamin- und Phenolharz Verwendung finden.

Der Anteil an Holzmehl in dem Füllstoff beträgt vorzugsweise 30 bis 60 Gewichts-%. Der Feuchtegehalt der Mischung sollte unter 5 % liegen, damit ein rieselfähiges Pulver vorliegt.

In dem Füllstoff können weitere Additive enthalten sein, die Farbpigmente und/oder Armierungsfasern und/oder Flammschutzmittel sein können. Der Zusatz bestimmter Additive kann dabei die Verwendung in der gesamten Platte ganz oder teilweise vermeiden, wobei die Zugabe von Additiven vorteilhafter Weise beim flächigen Streuen erfolgen sollte.

Die Mischung der Komponenten sollte erst kurz vor der Verwendung erfolgen. Den duroplastischen Pulverharzen können geeignete Härter zugesetzt sein. Die Oberseite einer ohne Papier hergestellten Platte kann abschließend lackiert werden.

Wie vorstehend beschrieben können beide Oberseite einer gepressten Platte behandelt werden. Hierbei ist zunächst die Oberfläche der ersten Oberseite zu behandelt und durchzuhärten, bevor die zweite Oberseite (Unterseite) entsprechend behandelt wird.

Das Durchhärten erfolgt vorzugsweise bei einer Temperatur von 200 °C, einem Druck von 30 kg/cm² und einer Presszeit von 40 Sekunden.

Mit Hilfe einer Zeichnung sollen Ausführungsbeispiele nachfolgend näher beschrieben werden. Es zeigen:

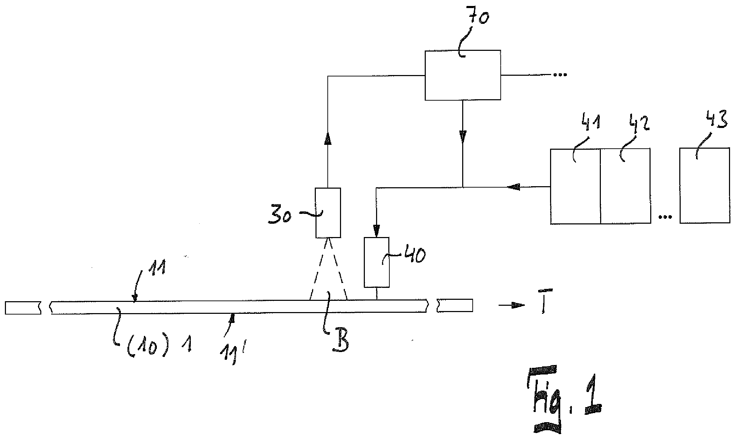

- Figur 1 -: die schematische Darstellung einer ersten Fertigungsanlage;

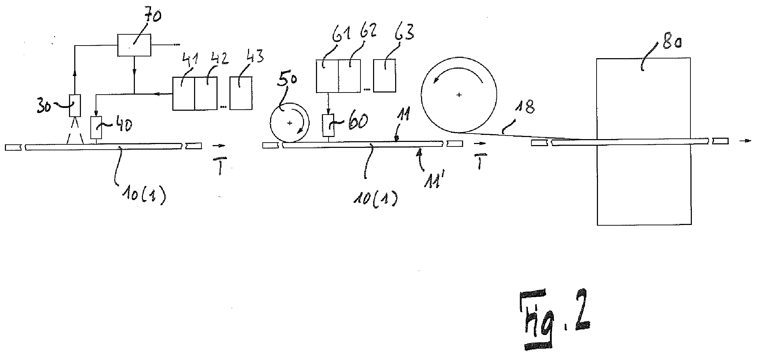

- Figur 2 -: die schematische Darstellung einer zweiten Fertigungsanlage;

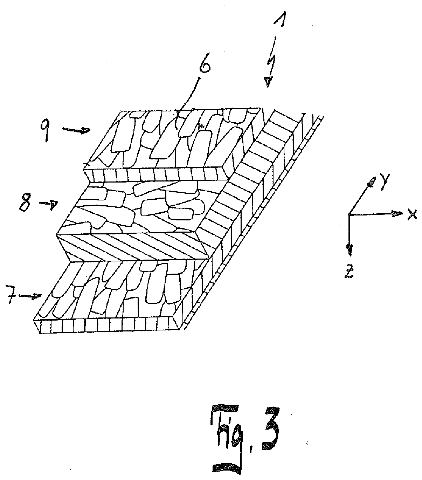

- Figur 3 -: die vereinfachte perspektivische Darstellung des Aufbaus eines Kuchens bzw. einer OSB;

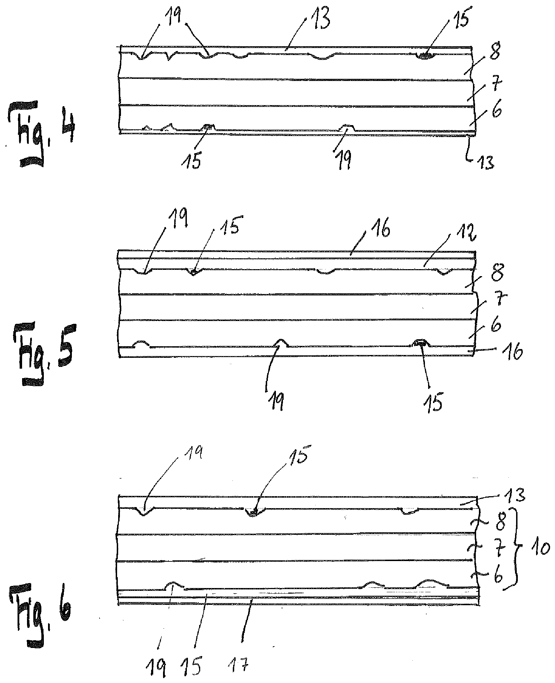

- Figur 4 -: die vereinfachte Seitenansicht einer ersten OSB,
- Figur 5 -: die vereinfachte Seitenansicht einer zweiten OSB und
- Figur 6 -: die vereinfachte Seitenansicht einer dritten OSB.

Mindestens drei Lagen 7, 8, 9 beleimter Strands 6 werden auf einem endlosen, angetriebenen Förderband zu einem Kuchen 1 gestreut, wobei die Ausrichtung der Strands 6 sich in benachbarten Lagen 7/8, 8/9 um 90° ändert. Dieser gestreute Kuchen 1 wird anschließend in einer Heißpresse zu einer Platte 10 gewünschter Dicke gepresst. Durch die unterschiedliche Ausrichtung der Strands 6 und abhängig von deren unregelmäßiger Geometrie (Länge, Breite, Dicke und Form) ist weder die gestreute Oberfläche der Oberseite 11 des Kuchens 1 noch die Oberflächen 11 der aus dem Kuchen 1 gepressten Platte 10 glatt, sondern sie weist Unebenheiten 19 und/oder Fehlstellen auf. Diese Unebenheiten 19 und/oder Fehlstellen werden entweder beim Kuchen 1 oder bei einer Platte 10 über einen Scanner 30 erfasst und anschließend mit einem Füllstoff 15 aufgefüllt und durchgehärtet, um die Oberfläche zu egalisieren, was nachfolgend detailliert beschrieben wird.

### Ausführungsbeispiel 1

Eine OSB 10 im Großformat (Länge 2800 mm, Breite 2070 mm, Dicke 29 mm) oder ein OSB-Strang wird auf einem hier nicht dargestellten Förderband in Richtung T unter einem Scanner 30 hindurchgefördert, der die Oberfläche der Oberseite 11 abscannt. Der Scanner 30 weist mehrere Messköpfe auf. Alle Unebenheiten/Vertiefungen 19 und/oder Fehlstellen werden dabei erfasst und über eine Software gespeichert. Mittels der Software werden die Volumina (Fläche x Tiefe) jeder einzelnen Unebenheiten 19 bzw. Fehlstelle ermittelt und zusammen mit den beim Scannen ermittelten Positionsdaten gespeichert. Die Unebenheiten 19, die eine Tiefe von 2 mm überschreiten und eine Flächenausdehnung von mehr als 25 mm besitzen, werden mit Hilfe eines hinter dem Scanner 30 befindlichen Streuaggregats 40 mit einem Füllstoff 15 aufgefüllt. Der Füllstoff 15 besteht aus einem Gemisch aus Holzmehl und Phenolharzpulver im Gewichtsverhältnis 1:1. Die Dichte des gestreuten Gemisches liegt bei 0,4 g/cm³.

Zur Berücksichtigung der anschließenden Verdichtung werden jeweils 30 % auf das Volumen der Vertiefung bezogen überstreut. Die Streuvorrichtung 40 füllt die Unebenheit jeweils mittig auf, was zur Bildung von (langgestreckten) pyramidenförmigen Pulverhaufen führt. Anschließend wird mit Hilfe einer Rolle 50, die Druck auf die OSB 10 ausübend über diese geführt wird, eine Vorverdichtung des Füllstoffes 15 vorgenommen. Daran anschließend wird auf die Oberseite 11 eine mit Phenolharz imprägnierte Papierlage 13 mit einem Endgewicht von 450 g/m² aufgelegt und der Aufbau in einer Heißpresse 80 bei einer Temperatur von 200°C, einem Druck von 30 kg/cm² für 40 Sekunden verpresst. Die Unterseite 11' der OSB kann anschließend wie die Oberseite 11 behandelt werden, sodass die OSB 10 zweiseitig beschichtet ist. Sofern es die Anforderungen gestatten, dass nur eine der Seiten 11, 11' absolut glatt sind, könnte zum Verpressen des Aufbaus auch sofort auf die Unterseite 11' eine phenolharzgetränkte Papierlage 13 aufgebracht werden, ohne dass zuvor die Unebenheiten 19 und/oder Fehlstellen mit einem Füllstoff 15 aufgefüllt wurden.

Die Streuvorrichtung 40 wird mit Holzmehl, Phenolharzpulver und etwaigen Additiven, die in Bevorratungsbehältern 41, 42, 43 enthalten sind gespeist. Die Anzahl der Bevorratungsbehälter 41, 42, 43 ist abhängig von dem Gemisch, das hergestellt werden soll. Der Scanner 30, der aufgrund mehrerer Messköpfe einen Oberflächen-Bereich B auf der Oberseite 11 erfassen kann, ist ebenso wie das Streuaggregat 40 mit einem Computer 70 verbunden, der die Steuerung der Anlage übernimmt. Über diesen Computer 70 kann auch die Zusammensetzung des Füllstoffes 15 gesteuert werden. Die beim Scannen erfassten Positionsdaten der Unebenheiten 19 und/oder Fehlstellen werden im Computer 70 gespeichert und können bei der weiteren Bearbeitung der OSB 10 berücksichtigt werden. So können beispielsweise bei der Aufteilung der OSB 10 in kleinere Platten die Fehlstellen berücksichtigt werden.

Durch die Ermittlung der Volumina der Unebenheiten 19 und/oder Fehlstellen kann die Menge an Füllstoff 15 und/oder die Zeitdauer in der Füllstoff 15 gestreut wird, ermittelt und die Streuvorrichtung 40 entsprechend vom Computer 70 gesteuert werden.

### Ausführungsbeispiel 2

Eine OSB 10 im Großformat (Länge 2800 mm, Breite 2070 mm, Dicke 29 mm) oder ein OSB-Strang wird auf einem hier nicht dargestellten Förderband in Richtung T unter einem Scanner 30 hindurchgefördert, der die Oberfläche der Oberseite 11 abscannt. Der Scanner 30 weist mehrere Messköpfe auf. Alle Unebenheiten/Vertiefungen 19 und/oder Fehlstellen werden dabei erfasst und über eine Software gespeichert. Mittels der Software werden die Volumina (Fläche x Tiefe) jeder einzelnen Unebenheiten 19 bzw. Fehlstelle ermittelt und zusammen mit den Positionsdaten gespeichert. Die Unebenheiten 19, die eine Tiefe von 2 mm überschreiten und eine Flächenausdehnung von mehr als 25 mm besitzen, werden mit Hilfe eines hinter dem Scanner 30 befindlichen Streuaggregats 40 mit einem Füllstoff 15 aufgefüllt. Der Füllstoff 15 besteht aus einem Gemisch aus Holzmehl und Phenolharzpulver im Gewichtsverhältnis 1:1. Die Dichte des gestreuten Gemisches liegt bei 0,4g/cm³. Zur Berücksichtigung der anschließenden Verdichtung werden jeweils 30 % auf das Volumen der Vertiefung bezogen überstreut. Die Streuvorrichtung 40 füllt die Unebenheit jeweils mittig auf, was zur Bildung von (langgestreckten) pyramidenförmigen Pulverhaufen führt. Anschließend wird mit Hilfe einer Rolle 50, die Druck auf die OSB 10 ausübend über diese geführt wird, eine Vorverdichtung des Füllstoffes 15 vorgenommen. Nach der Vorverdichtung wird mittels einer weiteren Streuvorrichtung 60 ein Gemisch in gleicher Zusammensetzung wie der Füllstoff 15 in einer Menge von 80g/m² auf die gesamte Oberfläche der Oberseite 11 aufgestreut, sodass sich eine Schicht 12 eines Holzpulver-Harz-Gemisches einstellt. Auf diese Schicht 12 wird dann ein Phenolharzpapier 16 mit einem Endgewicht von 250 g/m² aufgelegt. Dieser Aufbau wird dann zusammen mit einem phenolharzimprägnierten Kraftpapier an der Unterseite 11' der OSB in der Presse 80 verpresst. Das phenolharzimprägnierte Kraftpapier hat ein Endgewicht von 450 g/m². Die Presstemperatur beträgt auch hier 200°C, der Pressdruck 30 kg/cm² und die Presszeit 40 Sekunden.

Die Streuvorrichtungen 40, 60 werden mit Holzmehl, Phenolharzpulver und etwaigen Additiven, die in Bevorratungsbehältern 41, 42, 43, 61, 62, 63 enthalten sind gespeist. Die Anzahl der Bevorratungsbehälter 41, 42, 43, 61, 62, 63 ist abhängig von dem Gemisch, das hergestellt werden soll. Der Scanner 30, der aufgrund mehrerer Messköpfe einen Oberflächen-Bereich B auf der Oberseite 11 erfassen kann, ist ebenso wie das Streuaggregat 40, 60 mit einem Computer 70 verbunden, der die Steuerung der Anlage übernimmt. Über diesen Computer 70 kann auch die Zusammensetzung des Füllstoffes 15 gesteuert werden. Die beim Scannen erfassten Positionsdaten der Unebenheiten 19 und/oder Fehlstellen werden im Computer 70 gespeichert und können bei der weiteren Bearbeitung der OSB 10 berücksichtigt werden. So können beispielsweise bei der Aufteilung der OSB 10 in kleinere Platten die Fehlstellen berücksichtigt werden.

Durch die Ermittlung der Volumina der Unebenheiten 19 und/oder Fehlstellen kann die Menge an Füllstoff 15 und/oder die Zeitdauer in der Füllstoff 15 gestreut wird, ermittelt und die Streuvorrichtung 40, 60 entsprechend vom Computer 70 gesteuert werden.

### Ausführungsbeispiel 3

Auf eine Papierlage 17 wird der Füllstoff 15 aufgestreut. Anschließend wird die OSB 10 aufgelegt. Auf die Oberseite 11 wird mit dem Streuaggregat 60 Füllstoff 15 aufgestreut. Auf die ausgefüllten Unebenheiten und/oder Fehlstellen 19 wird die Papierlage 13 aufgelegt. Dieser Aufbau wird abschließend in der Presse so verpresst.

### Bezugszeichenliste

- 1: Kuchen
- 6: Strand
- 7: Lage
- 8: Lage
- 9: Lage
- 10: OSB
- 11: Oberseite
- 11': Unterseite
- 12: Schicht
- 13: Papierlage
- 14: Schicht
- 15: Füllstoff
- 16: Papierlage
- 17: Papierlage
- 19: Unebenheit/Fehlstelle
- 30: Scanner
- 40: Streuvorrichtung
- 41: Vorratsbehälter
- 42: Vorratsbehälter
- 43: Vorratsbehälter
- 50: Rolle
- 60: Streuvorrichtung
- 61: Vorratsbehälter
- 62: Vorratsbehälter
- 63: Vorratsbehälter
- 80: Presse / Heißpresse
- B: Oberflächenbereich
- T: Transportrichtung
- x, y, z: Koordinaten

## Patentansprüche

1. Verfahren zur Herstellung einer OSB (10), in dem ein aus mehreren Lagen (6, 7, 8) beleimter Strands (9) gestreuter Kuchen (1) in einer Heißpresse zu einer Platte gewünschter Dicke verpresst wird, mit folgenden Schritten:
a) Scannen der Oberfläche einer Oberseite (11) des Kuchens (1) oder der verpressten Platte (10) zur Ermittlung von Unebenheiten (19) und/oder Fehlstellen,
b) Bestimmung von Positionsdaten der ermittelten Unebenheiten (19) und/oder Fehlstellen,
c) Bestimmung der Volumina der einzelnen Unebenheiten (19) und/oder Fehlstellen,
d) gezieltes Verfüllen der Unebenheiten und/oder Fehlstellen (19) mit einem Füllstoff (15) auf der Grundlage der bestimmten Positionsdaten und Volumina, indem
e) der Füllstoff (15) mit einer Streuvorrichtung (40) aufgestreut wird.

2. Verfahren nach Anspruch 1, **dadurch gekennzeichnet, dass** der Füllstoff (15) ein Gemisch aus Holzstaub und einem Pulver eines duroplastischen Harzes ist.

3. Verfahren nach Anspruch 1 oder 2, **dadurch gekennzeichnet, dass** Löcher (19) und/oder Fehlstellen erst ab einer festgelegten Fläche und/oder Tiefe verfüllt werden.

4. Verfahren nach einem der vorstehenden Ansprüche, **dadurch gekennzeichnet, dass** die Positionsdaten und die Verteilung der Löcher (19) und/oder Fehlstellen gespeichert und in einem weiteren Bearbeitungsprozess der OSB verwendet werden.

5. Verfahren nach einem der vorstehenden Ansprüche, **dadurch gekennzeichnet, dass** zur Vergleichmäßigung der Oberfläche nach dem Verfüllen der Löcher (19) und/oder Fehlstellen auf die Oberseite (11) eine vollständige Schicht (12) eines Gemisches aus Holzmehl und eines duroplastischen Harzes aufgestreut wird.

6. Verfahren nach einem der vorstehenden Ansprüche, **dadurch gekennzeichnet, dass** zum Scannen der Oberfläche ein Streifenscanner (30) verwendet wird.

7. Verfahren nach einem der vorstehenden Ansprüche, **dadurch gekennzeichnet, dass** auf die verfüllte Platte (10) eine imprägnierte Papierlage (13) aufgelegt wird.

8. Verfahren nach einem der vorstehenden Ansprüche, **dadurch gekennzeichnet, dass** vor dem Scannen auf eine imprägnierte Papierlage (17) eine Schicht aus Füllstoff (15) aufgestreut wird und auf die gestreute Schicht eine OSB (10) aufgelegt wird.

9. Verfahren nach einem der vorstehenden Ansprüche, **dadurch gekennzeichnet, dass** die verfüllte Platte (10) in einer Kurztaktpresse durchgehärtet wird.

10. Verfahren nach einem der vorstehenden Ansprüche, **dadurch gekennzeichnet, dass** als Harz ein Melaminharz oder ein Phenolharz oder ein Gemisch aus Melamin- und Phenolharz verwendet wird.

11. Verfahren nach einem der vorstehenden Ansprüche, **dadurch gekennzeichnet, dass** der Anteil an Holzmehl in dem Füllstoff 30-60 Gewichts-% beträgt.

12. Verfahren nach einem der vorstehenden Ansprüche, **dadurch gekennzeichnet, dass** in dem Füllstoff Additive enthalten sind.

13. Verfahren nach Anspruch 12, **dadurch gekennzeichnet, dass** die Additive Farbpigmente und/oder Armierungsfasern und/oder Flammschutzmittel sind.

14. Verfahren nach einem der vorstehenden Ansprüche, **dadurch gekennzeichnet, dass** die Oberseite (11) der ohne Papier hergestellten Platte (10) lackiert wird.

15. Verfahren nach einem der vorstehenden Ansprüche, **dadurch gekennzeichnet, dass** es computergestützt durchgeführt wird.

## Claims

1. Method for producing an OSB (10) in which a mat (1) which is scattered from a plurality of layers (6, 7, 8) of glued strands (9) is pressed in a hot press to form a board of a desired thickness, comprising the following steps:
a) scanning the surface of an upper side (11) of the mat (1) or of the pressed board (10) in order to determine uneven portions (19) and/or defects,
b) determining position data of the determined uneven portions (19) and/or defects,
c) determining the volumes of the individual uneven portions (19) and/or defects,
d) targeted filling in of the uneven portions and/or defects (19) with a filler (15) on the basis of the determined position data and volumes in that
e) the filler (15) is scattered on with a scattering device (40).

2. Method according to Claim 1, **characterized in that** the filler (15) is a mixture of wood dust and a powder made of a duroplastic resin.

3. Method according to Claim 1 or 2, **characterized in that** holes (19) and/or defects are only filled in starting from a defined area and/or depth.

4. Method according to one of the preceding claims, **characterized in that** the position data and the distribution of the holes (19) and/or defects are stored and used in a further processing operation of the OSB.

5. Method according to one of the preceding claims, **characterized in that** in order to homogenize the surface after the filling in of the holes (19) and/or defects on the upper side (11) a complete layer (12) of a mixture of wood flour and a duroplastic resin is scattered on.

6. Method according to one of the preceding claims, **characterized in that** a line scanner (30) is used to scan the surface.

7. Method according to one of the preceding claims, **characterized in that** an impregnated paper layer (13) is placed on the filled in board (10).

8. Method according to one of the preceding claims, **characterized in that** a layer made of filler (15) is scattered on an impregnated paper layer (17) and an OSB (10) is placed on the scattered layer before the scanning.

9. Method according to one of the preceding claims, **characterized in that** the filled in board (10) is through hardened in a high-speed press.

10. Method according to one of the preceding claims, **characterized in that** a melamine resin or a phenol resin or a mixture of melamine resin and phenol resin is used as the resin.

11. Method according to one of the preceding claims, **characterized in that** the portion of wood flour in the filler is 30-60% by weight.

12. Method according to one of the preceding claims, **characterized in that** the filler contains additives.

13. Method according to Claim 12, **characterized in that** the additives are colour pigments and/or reinforcement fibres and/or flame retardants.

14. Method according to one of the preceding claims, **characterized in that** the upper side (11) of the board (10) which is manufactured without paper is surface-coated.

15. Method according to one of the preceding claims, **characterized in that** said method is carried out with computer assistance.

## Revendications

1. Procédé de fabrication d'un panneau OSB (10), dans lequel un gâteau (1) dispersé en plusieurs couches (6, 7, 8) de particules encollées (9) est pressé en un panneau d'épaisseur désirée dans une presse à chaud, comprenant les étapes suivantes consistant à :
a) scanner la surface d'une face supérieure (11) du gâteau (1) et du panneau pressé (10) pour déterminer des irrégularités de surface (19) et/ou des emplacements imparfaits,
b) définir des données de position des irrégularités de surface (19) et/ou des emplacements imparfaits déterminés,
c) définir les volumes des irrégularités de surface (19) et/ou des emplacements imparfaits individuels,
d) remplir de façon ciblée les irrégularités de surface et/ou les emplacements imparfaits (19) avec une matière de remplissage (15) sur la base des données de position et des volumes définis, en
e) dispersant la matière de remplissage (15) au moyen d'un dispositif de dispersion (40).

2. Procédé selon la revendication 1,
**caractérisé en ce que**
la matière de remplissage (15) est un mélange de poussières de bois et d'une poudre d'une résine thermodurcissable.

3. Procédé selon la revendication 1 ou 2,
**caractérisé en ce que**
des trous (19) et/ou des emplacements imparfaits ne sont remplis qu'à partir d'une surface et/ou d'une profondeur fixée.

4. Procédé selon l'une des revendications précédentes,
**caractérisé en ce que**
les données de position et la répartition des trous (19) et/ou des emplacements imparfaits sont mémorisées et utilisées dans un autre processus de traitement du panneau OSB.

5. Procédé selon l'une des revendications précédentes,
**caractérisé en ce que**
pour uniformiser la surface, après le remplissage des trous (19) et/ou des emplacements imparfaits, une couche complète (12) d'un mélange de farine de bois et d'une résine thermodurcissable est dispersée sur la face supérieure (11).

6. Procédé selon l'une des revendications précédentes,
**caractérisé en ce que**
un scanneur à bande (30) est utilisé pour scanner la surface.

7. Procédé selon l'une des revendications précédentes,
**caractérisé en ce que**
une couche de papier imprégnée (13) est posée sur la plaque remplie (10).

8. Procédé selon l'une des revendications précédentes,
**caractérisé en ce que**
avant le scannage, une couche de matière de remplissage (15) est dispersée sur une couche de papier imprégnée (17) et un panneau OSB (10) est posé sur la couche dispersée.

9. Procédé selon l'une des revendications précédentes,
**caractérisé en ce que**
la plaque remplie (10) est durcie à fond dans une presse à cadence courte.

10. Procédé selon l'une des revendications précédentes,
**caractérisé en ce que**
à titre de résine, on utilise une résine de mélamine ou une résine phénolique ou un mélange de résine de mélamine et de résine phénolique.

11. Procédé selon l'une des revendications précédentes,
**caractérisé en ce que**
la part de farine de bois dans la matière de remplissage est de 30 à 60 % en poids.

12. Procédé selon l'une des revendications précédentes,
**caractérisé en ce que**
des additifs sont contenus dans la matière de remplissage.

13. Procédé selon la revendication 12,
**caractérisé en ce que**
les additifs sont des pigments colorés et/ou des fibres de renforcement et/ou des agents retardateurs de flamme.

14. Procédé selon l'une des revendications précédentes,
**caractérisé en ce que**
la surface (11) de la plaque (10) fabriquée sans papier est vernie.

15. Procédé selon l'une des revendications précédentes,
**caractérisé en ce que**
il est mis en oeuvre en étant assisté par ordinateur.
